# EUROPÄISCHE PATENTSCHRIFT

(11) **EP 3 596 147 B1**
(45) Veröffentlichungstag und Bekanntmachung des Hinweises auf die Patenterteilung: **08.12.2021**
(21) Anmeldenummer: 18709647.4
(22) Anmeldetag: 15.03.2018
(51) Int. Cl.: C08G 18/00, C08G 59/40

(54) **VERFAHREN ZUR HERSTELLUNG VON OXAZOLIDINONGRUPPEN AUFWEISENDEN VERBINDUNGEN**
METHOD FOR PRODUCING COMPOUNDS COMPRISING OXAZOLIDINONE GROUPS
PROCÉDÉ DESTINÉ À LA PRODUCTION DES COMPOSITIONS CONTENANT DES GROUPES OXAZOLIDINONES

(30) Priorität: 17.03.2017 EP 17161672
(43) Veröffentlichungstag der Anmeldung: 22.01.2020
(73) Patentinhaber: BASF SE, 67056 Ludwigshafen am Rhein (DE)
(72) Erfinder: ELING, Berend, 49448 Lemfoerde (DE); THOMAS, Hans-Josef, 67056 Ludwigshafen (DE); DEGLMANN, Peter, 67056 Ludwigshafen (DE); HENGELSBERG, Janina, 49448 Lemfoerde (DE); PELZER, Tristan, 20148 Hamburg (DE); LUNISTRA, Gerrit A., 20148 Hamburg (DE)
(74) Vertreter: BASF IP Association
(86) Internationale Anmeldenummer: PCT/EP2018/056581
(87) Internationale Veröffentlichungsnummer: WO 2018/167228

(56) Entgegenhaltungen:
- WO-A1-86/06734
- WO-A1-2015/173101
- WO-A1-2015/173110
- HEIKE HALLER ET AL: "Recent Discoveries of Polyhalogen Anions - from Bromine to Fluorine : Recent Discoveries of Polyhalogen Anions - from Bromine to Fluorine", ZEITSCHRIFT FUR ANORGANISCHE UND ALLGEMEINE CHEMIE., Bd. 640, Nr. 7, 9. Mai 2014 (2014-05-09), Seiten 1281-1291, XP055398304, DE ISSN: 0044-2313, DOI: 10.1002/zaac.201400085 in der Anmeldung erwähnt
- CHATTAWAY F D ET AL: "Perhalides of quaternary ammonium salts", JOURNAL OF THE CHEMICAL SOC, CHEMICAL SOCIETY, LETCHWORTH; GB, Bd. 123, 1923, Seiten 6546-62, XP009016856, ISSN: 0368-1769
- Robert E Rijckles ET AL: "A Kinetic Study of the Addition of Bromine to Crotonic Acid in Ethylene Chloride1", , 1953, XP055398475, Gefunden im Internet: URL:http://pubs.acs.org/doi/pdf/10.1021/ja 01116a047 [gefunden am 2017-08-14]

## Beschreibung

Die vorliegende Erfindung betrifft Verfahren zur Herstellung von Oxazolidinongruppen aufweisenden Formkörpern bei dem man Polyisocyanat (a) mit mindestens einer, mindestens zwei Epoxidgruppen aufweisenden organischen Verbindung (b), mindestens einem, die Isocyanat/Epoxid-Reaktion beschleunigenden Katalysator (c) und gegebenenfalls Hilfs- und Zusatzstoffen (d) zu einer Reaktionsmischung vermischt in oder auf eine Form gibt und zu Oxazolidinongruppen aufweisenden Formkörpern umsetzt, wobei der die Isocyanat/Epoxid-Reaktion beschleunigenden Katalysator (c) eine Verbindung der allgemeinen Formel [M(R₁)(R₂)(R₃)(R₄)]⁺ [X Iₙ]⁻ aufweist, wobei M für ein Stickstoff- oder ein Phosphoratom steht, R₁, R₂, R₃, und R₄ für einen organischen Rest stehen, X für Fluor, Chlor, Brom oder lod steht, I für lod steht und n für rationale Zahlen von 0,1 bis 10 steht. Weiter betrifft die vorliegende Erfindung einen Oxazolidinongruppen aufweisender Formkörper, erhältlich nach einem solchen Verfahren und die Verwendung der erfindungsgemäßen Katalysatoren zur Herstellung von Oxazolidinongruppen aufweisenden Formkörpern.

Durch Umsetzung von Epoxiden mit Isocyanuraten werden Strukturen erhalten, die sowohl Isocyanurat- als auch Oxazolidinongruppen erhalten. Diese Verbindungen werden auch als Epoxy-Isocyanat-Verbindungen (EPIC-Verbindungen) bezeichnet. Als Katalysatoren können dabei Lithiumbromid, quarternäre Amoniumsalze oder Lewissäuren, wie Aluminiumchlorid, eingesetzt werden. Die erhaltenen EPIC-Verbindungen zeichnen sich durch hohe Dauertemperaturbeständigkeit und schlechte Brennbarkeit aus. Die durch solche Verfahren erhaltenen Materialien sind aber durch einen hohen Anteil an Isocyanuratstrukturen und die daraus resultierende starke Vernetzung nicht wiederaufschmelzbar und zeigen eine hohe Sprödigkeit.

WO 2015173101 beschreibt den Einsatz eines Katalysators auf Basis von quarternärem Phosphor, Arsen, Antimon oder Wismuth, der zu einer linearen, Oxazolidinongruppen haltigen, oligomeren Verbindung mit hoher Regioselektivität führt, wobei die erhaltenen regioselektiven EPIC-Verbindungen sich durch geringe Viskositäten und geringere Glastemperaturen auszeichnen. WO 2015173110 beschreibt den Einsatz eines halogenfreien Katalysators zur Herstellung von Oxazolidinongruppen enthaltenden Verbindungen. Auch dieses Dokument beschreibt vorwiegend Prepolymere, Formkörper werden nicht beschrieben.

Zur Verringerung des Anteils an Isocyanuratgruppen und zur Verbesserung der Sprödigkeit dieser Materialien schlägt WO 86/06734 den Einsatz einer Organoantimoniodidstruktur vor. Dazu werden oxazolidinongruppen haltige Prepolymere hergestellt und in einem zweiten Schritt durch Zugabe weiterer Substanzen, beispielsweise Methylendianilin, gehärtet.

Aufgabe der vorliegenden Erfindung war es einen oxazolidinongruppenhaltigen Feststoff, insbesondere einen oxazolidinongruppenhaltigen Formkörper zu liefern, der hervorragende mechanische Eigenschaften und eine hohe Temperaturstabilität aufweist. Überraschenderweise wurde die erfindungsgemäße Aufgabe gelöst durch einen oxazolidinongruppenhaltigen Formkörper, herstellbar durch ein Verfahren bei dem man Polyisocyanat (a) mit mindestens einer, mindestens zwei Epoxidgruppen aufweisenden organischen Verbindung (b), mindestens einem, die Isocyanat/Epoxid-Reaktion beschleunigenden Katalysator (c) und gegebenenfalls Hilfs- und Zusatzstoffen (d) zu einer Reaktionsmischung vermischt in oder auf eine Form gibt und zu Oxazolidinongruppen aufweisenden Formkörpern umsetzt, wobei der die Isocyanat/Epoxid-Reaktion beschleunigenden Katalysator (c) eine Verbindung der allgemeinen Formel [M(R₁)(R₂)(R₃)(R₄)]⁺ [X Iₙ]⁻ aufweist, wobei M für ein Stickstoff- oder ein Phosphoratom steht, R₁, R₂, R₃, und R₄ für einen organischen Rest stehen, X für Fluor, Chlor, Brom oder lod steht, I für lod steht und n für rationale Zahlen von 0,1 bis 10 steht.

In einer bevorzugten Ausführungsform wird der erfindungsgemäße Formkörper in einem Schritt erhalten. Dabei bedeutet "in einem Schritt", dass alle Komponenten zur Herstellung des Formkörpers vor Beginn der Reaktion vermischt werden und die Reaktion anschließend bis zum Erhalt eines Formkörpers ohne die Zugabe von weiteren Verbindungen und insbesondere, ohne insbesondere ohne Zugabe von weiteren Verbindungen, die gegenüber Isocyanatgruppen oder Epoxygruppen reaktive Gruppen enthalten, erfolgt.

Vorzugsweise ist der erhaltene Formkörper ein Feststoff. Dabei handelt es sich im Rahmen der vorliegenden Erfindung um einen Feststoff wenn die Shore-Härte gemäß DIN EN ISO 868 größer ist als 10 shore A, bevorzugt größer als 30 shore A und insbesondere größer ist als 50 shore A. In einer weiteren bevorzugten Ausführungsform weist der erfindungsgemäße Formkörper eine hohe Kerbschagzähigkeit nach DIN EN ISO 179-1 gemäß Charpy von vorzugsweise größer als 10 kJ/m², besonders bevorzugt größer 20 kJ/m² und insbesondere größer als 30 kJ/m² auf.

Als Formen zur Herstellung des erfindungsgemäßen Formkörpers können alle Gegenstände eingesetzt werden, welche die Reaktionsmischung zumindest während eines Teils der Reaktion zum Festkörper in eine makroskopische Form bringen und die makroskopische Form des Festkörpers auch nach dem Aushärten zum erfindungsgemäßen Feststoff erkennbar bleibt. Formmaterialien können nach dem Aushärten entfernt werden, können aber auch einen Teil des erfindungsgemäßen Formkörpers darstellen, beispielsweise bei dem Beschichten von Gegenständen durch Tauchlackierung, wie der Tauchlakierung von elektronischen Gegenständen wie Transformatoren. Mikroskopische Formgebung, beispielsweise durch Einschluss von Verbindungen, die im Einzelnen keinen Einfluss auf die makroskopische Form haben, wie Füllstoffe, sollen nicht als Form im Sinn der Erfindung gelten. Beispiele für erfindungsgemäße Formen sind offene oder geschlossene Formen, beispielsweise aus Metall oder Kunststoff sein, aber auch Wickelkerne, beispielsweise bei der Herstellung von gewickelten Posten oder Rohren, Vakuumformen, wie sie üblicherweise bei der Vakuuminfusion eingesetzt werden, oder Formen, die ein kontinuierliches Formgeben erlauben, wie üblicherweise in der Pultrusion eingesetzt. Als Polyisocyanate a) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente a) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiisocyanat, 2-Ethyltetramethylendiisocyanat-1,4,2-methylpen-tamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat (das sollte doch H12 MDI sein oder ?) sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2―Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Harnstoff-, Biuret-, Allophanat-, Carbodiimid-, Isocyanurat-, Uretdion-, Carbamat- und/oder Urethangruppen enthaltende Polyisocyanate, häufig auch zusammen mit nicht umgesetzten Polyisocyanaten.

Bei der Epoxidgruppen enthaltenden Komponente b) handelt es sich um beliebige, mindestens zwei Epoxidgruppen aufweisende aliphatische, cycloaliphatische, aromatische und/oder heterocyclische Verbindungen. Die bevorzugten als Komponente b) geeigneten Epoxide weisen pro Molekül 2 bis 4, vorzugsweise 2 Epoxidgruppen und ein Epoxidäquivalentgewicht von 90 bis 500 g/eq, vorzugsweise 140 bis 220 g/eq auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylpropan (Bisphenol A), von 4,4'-Dihydroxy-3,3'-dimethyldiphenylmethan, von 4,4'-Dihydroxydiphenylmethan (Bisphenol F), 4,4'-Dihydroxydiphenylcyclohexan, von 4,4'-Dihydroxy-3,3'-dimethyldiphenylpropan, von 4,4'-Dihydroxydiphenyl, aus 4,4'-Dihydroxydiphenylsulfon (Bisphenol S), von Tris-(4-hydroxyphenyl)-methan, den Chlorierungs- und Bromierungsprodukten der vorstehend genannten Diphenole, von Novolaken (d.h. aus Umsetzungsprodukten von ein- oder mehrwertigen Phenolen und/oder Kresolen mit Aldehyden, insbesondere Formaldehyd, in Gegenwart saurer Katalysatoren im Equivalenzverhältnis von kleiner 1 : 1), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Isophthalsäurediglycidylester, Terephthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen oder Hexahydrophthalsäurediglycidylester, die gegebenenfalls mit Methylgruppen substituiert sein können.

Glycidylether mehrwertiger Alkohole, beispielsweise von 1,4-Butandiol (Araldite^{®} DY-D, Huntsman), 1,4-Butendiol, Glycerin, Trimethylolpropan (Araldite^{®} DY-T/CH, Huntsman), Pentaerythrit und Polyethylenglykol können ebenfalls verwendet werden. Von weiterem Interesse sind Triglycidylisocyanurat, N,N'-Diepoxypropyloxyamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich können auch Epoxidierungsprodukte von mehrfach ungesättigten Verbindungen eingesetzt werden, wie vegetabilischen Ölen und deren Umwandlungsprodukten. Epoxidierungsprodukte von Di- und Polyolefinen, wie Butadien, Vinylcyclohexan, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten, können ebenfalls verwendet werden.

Vorzugsweise werden erfindungsgemäß folgende Polyepoxidverbindungen oder deren Mischungen als Komponente b) verwendet:
Polyglycidylether mehrwertiger Phenole, insbesondere von Bisphenol A (Araldit^{®} GY250, Huntsman; Ruetapox^{®} 0162, Bakelite AG; Epikote^{®} Resin 162, Hexion Specialty Chemicals GmbH; Eurepox 710, Brenntag GmbH;Araldit^{®} GY250, Hunstman, D.E.R.^{™} 332, The Dow Chemical Company; Epilox^{®} A 18-00, LEUNA-Harze GmbH) oder Bisphenol F (4,4'-Dihydroxydiphenyl-methan, Araldit^{®} GY281, Huntsman; Epilox^{®} F 16-01, LEUNA-Harze GmbH; Epilox^{®} F 17-00, LEUNA-Harze GmbH) Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan; 3,4-Epoxycyclohexylmethan-3,4-epoxycyclohexan-carboxylat.

Polyglycidylether von Bisphenol A, Bisphenol F oder von Novolaken der Mischungen davon sind ganz besonders bevorzugt, insbesondere Polyglycidylether von Bisphenol F.

Flüssige Polyepoxide oder niedrigviskose Diepoxide, wie Bis-(N-epoxypropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird vorzugsweise in einer solchen Menge eingesetzt, die einem Äquivalentverhältnis von Isocyanatgruppen zu Epoxidgruppen von 1 : 10 bis 10 : 1, vorzugsweise 1 : 5 bis 5 : 1 und insbesondere 1 : 1,5 bis 2 : 1 entspricht.

Katalysatoren c) beschleunigen die Reaktion der Epoxidgruppen aufweisenden organischen Verbindung (b) mit den Polyisocyanaten (a) stark. Dabei enthält der Katalysator (c) mindestens eine Verbindung der allgemeinen Formel

[M(R₁)(R₂)(R₃)(R₄)]⁺ [X Iₙ]⁻,

wobei M für ein Stickstoff- oder ein Phosphoratom, vorzugsweise ein Stickstoffatom steht, R₁, R₂, R₃ und R₄ für einen organischen Rest stehen, jeweils unabhängig voneinander ausgewählt aus der Gruppe, bestehend aus linearen oder verzweigtkettigen Alkylresten mit 1 bis 22 Kohlenstoffatomen, die mit Heteroatomen oder Heteroatome enthaltenden Substituenten substituiert sein können, alkylgebrückten cycloaliphatischen oder aromatischen Gruppen mit 3 bis 22 Kohlenstoffen, die mit Heteroatomen oder Heteroatome enthaltenden Gruppen substituiert sein können und wobei M Teil des Rings sein kann, und Arylresten mit 6 bis 18 Kohlenstoffatomen, die mit Alkylgruppen mit 1 bis 10 Kohlenstoffatomen und/oder Heteroatomen substituiert sein können, wobei M Teil des Rings sein kann, X für Fluorid, Chlorid, Bromid oder lodid, vorzugsweise für Chlorid oder Bromid steht, I für lod steht und n für rationale Zahlen von 0,1 bis 10, vorzugsweise 0,5 bis 3, mehr bevorzugt 1,5 bis 2,5 und insbesondere 2,0 steht.

Die Reste R₁, R₂, R₃, und R₄ stehen vorzugsweise für einen organischen Rest, jeweils unabhängig voneinander ausgewählt aus der Gruppe bestehend aus Phenyl, Cyclohexyl und linearen oder verzweigtkettigen Alkylgruppen mit 1 bis 6 Kohlenstoffatomen, die jeweils auch substituiert sein können, vorzugsweise aber unsubstituiert sind. In einer besonders bevorzugten Ausführungsform sind die Reste R₁, R₂, R₃ und R₄ identisch.

In einer weiteren Ausführungsform der vorliegenden Erfindung werden solche Verbindungen [M(R₁)(R₂)(R₃)(R₄)]⁺ als Kationen eingesetzt, die mindestens einen fünf- bis sechsgliedrigen Heterocyclus enthalten, der durch die Brücke von zwei Resten R gebildet wird, insbesondere einen fünfgliedrigen Heterocyclus, der mindestens ein Stickstoffatom sowie gegebenenfalls ein Sauerstoff- oder Schwefelatom aufweist. Besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen, wie Pyridinium, Pyridazinium, Pyrimidinium, Pyrazinium, Imidazolium, Pyrazolium, Pyrazolinium, Imidazolium, Thiazolium, Oxazolium, Pyrrolidinium und Imidazolidinium. Im Fall der aromatischen Heterocyclen kann der Rest -R₄ durch eine aromatische Doppelbindung ersetzt werden.

Im Rahmen der vorliegenden Erfindung werden unter Heteroatomen Atome verstanden, die nicht Kohlenstoff oder Wasserstoff sind, vorzugsweise handelt es sich bei Heteroatomen um Stickstoff, Sauerstoff, Schwefel, Phosphor oder Halogenatome, wie Fluor, Chlor oder Brom. [X Iₙ]⁻ ist Anion, wobei X für Fluorid, Chlorid, Bromid oder lodid steht und I für elementares lod steht. Dabei ist die exakte Lage der negativen Ladung nicht Gegenstand der Erfindung. Üblicherweise wird die Ladung bei X liegen, so dass es sich bei X um X- handelt, also Fluorid (F-), Chlorid (Cl-) Bromid (Br-) oder lodid (I-). Das Anion [X Iₙ]⁻ wird dabei erhalten durch Umsetzung von [M(R₁)(R₂)(R₃)(R₄)]⁺ X⁻ mit elementarem lod im Molverhältnis 1 : n, wobei n wie oben definiert ist. Verbindungen [M(R₁)(R₂)(R₃)(R₄)]⁺ X⁻ sind bekannt und umfassen beispielsweise Tetrabutylammoniumchlorid, Tetrabutylammoniumbromid oder Tetrabutylphosphoniumbromid und sind kommerziell erhältlich. Auch die Herstellung der quarternäre Ammoniumtrihalide ist bekannt und beispielsweise beschrieben in H. Haller et al, Z. Anorgan. Allg. Chem., 2014, 640, (7), 1281 ― 1291.

Die Katalysatoren (c) werden üblicherweise in einer Menge von 0,1 bis 10 Gew.-%, vorzugsweise 0,2 bis 5 Gew.-% und insbesondere 0,5 bis 3 Gew.-%, jeweils bezogen auf das Gesamtgewicht der Komponenten(a), (b) und (c) eingesetzt.

Als Zusatzstoffe d) können beispielsweise Polyole, Polyamine, Treibmittel, Füllstoffe, bekannten Schaumstoffstabilisatoren, Formtrennmittel sowie bekannte UV-Stabilisatoren und Hydrolyseschutzmittel eingesetzt werden.

Polyole umfassen Verbindungen, die mindestens 2, insbesondere 2 bis 8 und vorzugsweise 2 bis 3 alkoholische Hydroxylgruppen und ein Molekulargewicht von 62 bis 8000 g/mol aufweisen. Solche Verbindungen sind als Aufbaukomponente für Polyurethan an sich bekannt und umfassen niedermolekulare Kettenverlängerer und Polyole mit zahlenmittleren Molekulargewichten von größer als 200 g/mol. Beispiele für Kettenverlängerer sind einfache mehrwertige Alkohole wie Ethylenglykol, Hexadiol-1,6, Glycerin oder Trimethylolpropan, Beispiele für Polyole sind Dimethylsiloxan-Einheiten aufweisende Polyole, z.B. Bis-(dimethylhydroxymethyl-silyl)ether; Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind, Polyhydroxylpolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind, oder Polycarbonatpolyole, die beispielsweise aus mehrwertigen Alkoholen und Carbonaten oder Phosgen erhalten werden können.

Als Polyamine können Verbindungen mit mindestens zwei gegenüber Isocyanaten reaktiven Wasserstoffatomen, von denen mindestens eines zu einer primären oder sekundären Aminogruppe gehört, eingesetzt werden. Diese umfassen Polyetheramine und Verbindungen mit Molekulargewichten von kleiner 500 g/mol. Polyetheramine sind aus der Polyurethanchemie bekannt und können erhalten werden durch endständige Aminierung von Polyetherpolyolen. Diese weisen vorzugsweise Molekulargewichte von 500 bis 8000 g/mol auf. Die vorzugsweise verwendeten Verbindungen mit zwei Aminogruppen und mit Molekulargewichten von kleiner 500 g/mol weisen besonders bevorzugt ein Molekulargewicht von 58 bis 300 g/mol und insbesondere von 100 bis 200 g/mol auf. Dabei weisen diese Verbindungen als gegenüber Isocyanaten reaktive Gruppen vorzugsweise zwei primäre Aminogruppen auf. In einer besonders bevorzugten Ausführungsform sind die primären Aminogruppen an aromatische Kohlenstoffatome, vorzugsweise an einen aromatischen 6-Ring, insbesondere in Metha- oder Paraposition gebunden.

Vorzugsweise werden weniger als 20 Gew.-%, besonders bevorzugt weniger als 10 Gew.-% und insbesondere keine Polyole und/oder Polyamine eingesetzt. Werden Polyole und/oder Polyamine eingesetzt, so geschieht dies vorzugsweise in solchen Mengen, dass das Verhältnis aus Isocyanatgruppen der Polyisocyanate (a) und gegenüber Isocyanat reaktiven Verbindungen der Komponente (d) größer als 1,5 : 1, vorzugsweise größer als 5 : 1 und insbesondere größer als 10 : 1 ist.

Als Treibmittel, welche zur Herstellung der erfindungsgemäßen Schaumstoffe verwendet werden, gehören chemische Treibmittel, wie Wasser, Ameisensäure und Gemische daraus. Zusätzlich zu Ameisensäure und Wasser kommt als chemisches Treibmittel Phospholinoxid in Frage. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten a) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan, Pentafluorpropan, Heptafluorpropan und Hexafluorbuten. Auch Gemische dieser niedrigsiedenden Flüssigkeiten untereinander und/oder mit anderen substituierten oder unsubstituierten Kohlenwasserstoffen können verwendet werden. Vorzugsweise sind die physikalischen Treibmittel in der Komponente (b) löslich.

Falls Treibmittel verwendet werden, werden vorzugsweise keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere, bzw. Mischungen von Pentan-isomeren verwendet. In einer besonders bevorzugten Ausführungsform werden weniger als 5 Gew.-% bevorzugt weniger als 2 Gew.-%, mehr bevorzugt weniger als 0,5 Gew.-% und insbesondere weniger als 0,1 Gew.-% Treibmittel verwendet, jeweils bezogen auf das Gesamtgewicht der Komponente (a) bis (d).

Weitere gegebenenfalls mitzuverwendende Hilfs- und Zusatzmittel (d) sind beispielsweise Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie Methacrylsäure, β-Hydroxypropylester, Maleinsäure- und Fumarsäureester; Flammschutz verbessernde Substanzen wie roter Phosphor oder Magnesiumoxid; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt.

Die Hilfs und Zusatzmittel (d) können darüber hinaus noch bekannten Schaumstoffstabilisatoren vom Typ der Polyethersiloxane, Formtrennmittel, z.B. Polyamidwachse und/oder Stearinsäurederivate und/oder natürliche Wachse, z.B. Carnaubawachs, sowie bekannte UV-Stabilisatoren und Hydrolyseschutzmittel enthalten.

Vorzugsweise handelt es sich bei den erfindungsgemäßen Oxazolidinongruppen enthaltenden Festkörpern um Duromere. Zur Herstellung der Duromeren weisen diese Einsatzstoffe mit gegenüber reaktiven Gruppen vorzugsweise eine mittlere Funktionalität von vorzugsweise 1,9 bis 3,0, besonders bevorzugt größer 1,95 bis 2,5. auf. Dabei können jeweils anhand der Eingesetzten Verbindungen, in Anlehnung an die Polyurethanchemie, die Eigenschaften der Oxazolidinongruppen aufweisenden Verbindung, beispielsweise durch Einstellen der Vernetzungsdichte, maßgeschneidert werden.

Die Herstellung der erfindungsgemäßen Formkörper erfolgt durch Vermischen der Komponenten (a) bis (d) zu einer Reaktionsmischung und Ausreagieren lassen der Reaktionsmischung in oder auf einer Form. Dabei können alle Einsatzstoffe gleichzeitig gemischt werden. In einer Ausführungsform der vorliegenden Erfindung werden eine Polyolkomponente, enthaltend die Komponenten (b) und (c) sowie gegebenenfalls (d) vorgelegt und mit der Isocyanatkomponente zur Reaktionsmischung vermischt. In einer weiteren Ausführungsform der Erfindung werden die Polyisocyanate (a) mit den Katalysatoren (c) zu einer Isocyanatkomponente vermischt und mit der Komponente (b) und gegebenenfalls (d) zur Reaktionsmischung vermischt. Die Umsetzung der Reaktionsmischung zum Oxazolidinongruppen aufweisenden Formkörper erfolgt vorzugsweise bei einer Temperatur von größer 120 °C, besonders bevorzugt bei einer Temperatur von 150 °C bis 275 °C und insbesondere bei einer Temperatur von 180 bis 220 °C, wobei die Temperierung vorzugsweise über die Temperierung der Form oder durch Aushärtung im Ofen erfolgt. Die Temperatur der Ausgangsstoffe beim Vermischen beträgt vorzugsweise 0 bis 100 °C, besonders bevorzugt 20 bis 80 und insbesondere 25 bis 60 °C. Nach Erhalt einer ausreichenden Festigkeit können die Formkörper ais der Form entnommen werden.

Die erfindungsgemäßen Oxazolidinongruppen haltigen Verbindungen zeichnen sich durch sehr gute Hitzebeständigkeit aus sowie hervorragende mechanische Eigenschaften, beispielsweise eine hervorragende Kerbschagzähigkeit aus. Oxazolidinongruppenhaltige Duromere gemäß der vorliegenden Erfindung können beispielsweise als Beschichtungen, Klebstoffe und Verbundwerkstoffe eingesetzt werden. So weisen die erfindungegemäßen Reaktionsmischungen eine lange offene Zeit bei 50 °C auf. Weiter zeigen die erfindungsgemäßen Oxazolidinongruppenhaltigen Duromere hohe Glastemperaturen, hervorragende mechanische Werte, wir Zugfestigkeit oder Härte und hohe Schlagzähigkeiten, wodurch diese sich hervorragend eignen für den Einsatz als Tauchlacke für elektronische Anwendungen, wie eine Isolationsschicht für Transformatoren, in Verbundbauteilen, wie rotationsgewickelten Bauteilen, beispielsweise Masten, oder großen Verbundbauteilen, die beispielsweise durch Vakuuminfusionstechnologie hergestellt werden, wie beispielsweise Flügeln für Windkraftanlagen. Besonders bevorzugt werden erfindungsgemäße Oxazolidinongruppenhaltigen Duromer eingesetzt in Verbundbauteilen, wie rotationsgewickelten Bauteilen und insbesondere großen Verbundbauteilen, die beispielsweise durch Vakuuminfusionstechnologie hergestellt werden, wie beispielsweise Flügeln für Windkraftanlagen.

Beispiele:
Im Folgenden soll die Erfindung anhand von Beispielen dargelegt werden.

Rohstoffe:
Epoxy 1: Bisphenol A basierter Diglycidylether (Lupranate Epilox A19-03, der Firma LEUNA-Harze GmbH) mit einem Epoxid-Äquivalent Gewicht (g/Äquiv.) von 190.
Epoxy 2: o-Kresylglycidylether (Grilonit RV 1805, der Firma EMS-Griltech) mit einem Epoxid Äquivalentgewicht (g/Äquiv.) von 168.
Iso 1: Uretonimin-modifiziertes 4,4'MDI (Lupranate MM103, der Firma BASF).
Iso 2: 4,4' MDI basiertes Präpolymer mit einem NCO-Wert von 23% (Lupranate MP102 der Firma BASF).
Iso 3: 4,4' MDI (Lupranate ME, der Firma BASF)
Mesamoll: (C10―C21) Alkansulfonsäurephenylester, der Firma Lanxess.
Tetrabutylammoniumchlorid, Tetrabutylammoniumbromid,
Tetraphenylphosphoniumbromid und lod von der Firma Sigma-Aldrich.

Beispiele:
Herstellung der Katalysatoren:
Katalysator 1:
   27,8 g Tetrabutylammoniumchlorid (0,1 mol) und 25,4 g I₂ (0,1 mol) werden in einem 100mL Glaskolben abgewogen. Das Gefäß wird abgeschlossen und in einen Ofen für 2 Stunden bei 130°C temperiert. Danach wird die Temperatur reduziert auf 90°C. Der Kolben wird aus dem Ofen genommen und das Reaktionsprodukt wird direkt gemischt mit 79,8 g Mesamol, das kurz zuvor auf 90°C erwärmt wurde. Der Kolben wird anschließend geschlossen und das Gemisch wird weiterhin gekühlt, gelagert bei 55°C und als solche verwendet. Das Mischverhältnis vom Reaktionsprodukt und Mesamol war 0,4 zu 0,6. Der Katalysator wird in dem Weiteren Katalysator 1 genannt.
Katalysator 2:
   Für die Herstellung des Katalysators 2 wird das molare Verhältnis Tetrabutylammoniumchlorid und Jod (I₂) reduziert auf 1 zu 0,5. Dazu werden die Mengen der Einsatzstoffe geändert auf 27,8 g Tetrabutylammoniumchlorid und 12,7g Iod. Die Synthese und Zugabe von Mesamol werden durchgeführt wie für Katalysator 1 beschrieben; die zugegebene Menge Mesamoll beträgt 60,8 g. Dieses entspricht ein Mischverhältnis vom Reaktionsprodukt und Mesamol von 0,4 zu 0,6.
Katalysator 3:
   Für die Herstellung des Katalysators 3 wird Tetrabutylammoniumbromid reagiert mit Jod (I₂) in einem molaren Verhältnis von 1 zu 1. Dazu werden 32,2 g Tetrabutylammoniumbromid und 25,4 g lod mit einander zu Reaktion gebracht. Die Synthese und Zugabe von Mesamol werden durchgeführt wie für Katalysator 1 beschrieben; die zugegebene Menge Mesamoll beträgt 86,4 g. Dieses entspricht ein Mischverhältnis vom Reaktionsprodukt und Mesamol von 0,4 zu 0,6.
Katalysator 4:
   Für die Herstellung des Katalysators 4 wird das molare Verhältnis Tetrabutylammoniumbromid und Jod (I₂) reduziert auf 1 zu 0,5. Dazu werden die Mengen der Einsatzstoffe geändert auf 32,2 g Tetrabutylammoniumbromid und 12,7 g lod. Die Synthese und Zugabe von Mesamol werden durchgeführt wie für Katalysator 1 beschrieben. die zugegebene Menge Mesamoll beträgt 67,4 g. Dieses entspricht ein Mischverhältnis vom Reaktionsprodukt und Mesamol von 0,4 zu 0,6.
Katalysator A:
   20,0 g Tetrabutylammoniumchlorid und 30,0 g Mesamol werden in einem 100mL Glaskolben abgewogen. Das Gefäß wird abgeschlossen und in einen Ofen für 2 Stunden bei 130°C temperiert. Es lag eine flüssige Komponente vor, die auch bei abkühlen auf Raumtemperatur stabil war.
Katalysator B:
   20,0 g Tetrabutylammoniumbromid und 30,0 g Mesamol werden in einem 100mL Glaskolben abgewogen. Das Gefäß wird abgeschlossen und in einen Ofen für 2 Stunden bei 130°C temperiert. Es lag eine flüssige Komponente vor, die auch bei abkühlen auf Raumtemperatur stabil war.

### Nachweis Bildung Oxazolidinon-Gruppen

Die Katalysatoren 1 bis 4 und die Katalysatoren A und B werden für die Herstellung von Oxazolidinongruppen enthaltende Polymeren eingesetzt. Dazu wurden die Polymere hergestellt aus Epoxy 1 und Iso 1, wobei das molare Verhältnis der reaktiven Gruppen berechnet ist auf eins zu eins und die nominale, molare Katalysatormenge, bezogen auf den Tetrabutylammoniumhalogenid-Gehalt, konstant gehalten wurde. Hierzu wurden die angegebenen Komponenten bei 55°C temperiert und in einem Speedmixer bei 1600 rpm für eine halbe Minute vermischt. Anschließend wurde das Gemisch in eine 200°C heiße, oben offene Aluminiumform mit der Maßen 15x20x0,2 cm gegeben und über eine Periode von 30 Minuten ausreagiert.

Als Nachweismethode für die Bildung von Oxazolidinongruppen wurde IR-Spektroskopie verwendet. Die IR Analyse wurde durchgeführt mit einem IR Gerät der Firma Bruker, Model ALPHA-27 ausgestattet mit einem Diamantmesskopf. Eine kleine Probe des Polymers (einige Milligramm) wurde gegen den Diamantmesskopf gedrückt und ein Spektrum aufgenommen. Die Bildung der Oxazolidinon und Isocyanurat-Gruppen wurden nachgewiesen durch die Anwesenheit einer Bande bei 1749, beziehungsweise 1704 cm ⁻¹. Das Verhältnis Oxazolidinon über Isocyanurat wurde ausgewertet an Hand des Quotienten der Höhe (in cm) der beiden Banden (Hohe bei 1749 cm ⁻¹ dividiert durch die Höhe bei 1704 cm ⁻¹). Je höher dieser Wert, desto mehr Oxazolidinon und weniger Isocyanurat Gruppen enthält das Polymer. Es sei bemerkt, dass die Rohstoffe Epoxy 1 und Iso 1 in dem relevanten IR-Frequenzbereich keine Adsorptionen aufweisen. Die Basislinie wurde gezogen durch die Absorptionswerte bei 1850 cm ⁻¹ und ein Minimum, das sich bei einer Adsorption von etwa 1550 cm ⁻¹ ergibt.

Die Tabelle 1 beschreibt die Mischungen und den an den Platten gemessenen Oxazolidinon-Isocyanurat Quotienten (Ox/Is). Die Tabelle 1 zeigt weiter, dass die Platten hergestellt mit den Katalysatoren der Erfindung einen deutlich höheren Oxazolidinon-Gehalt aufweisen.

**Tabelle 1**

| Katalysator | | | | | | |
|---|---|---|---|---|---|---|
| 1 [Gew.-Teile] | 4,0 | | | | | |
| 2 [Gew.-Teile] | | 3,0 | | | | |
| 3 [Gew.-Teile] | | | 4,3 | | | |
| 4 [Gew.-Teile] | | | | 3,3 | | |
| A [Gew.-Teile] | | | | | 2,0 | |
| B [Gew.-Teile] | | | | | | 2,4 |
| | | | | | | |
| Tg [°C] | 131 | 113 | 135 | 119 | 110 | 110 |
| Shore-Härte | 86 | 86 | 85 | 85 | 86 | 87 |
| Kerbschlagzähigkeit [kJ/m²] | 71 | 24 | 41 | 42 | 8 | 14 |
| Biegefestigkeit [N/mm²] | 134 | 141 | 147 | 146 | 104 | 119 |
| Biege-E-modul [N/mm²] | 2875 | 3345 | 2900 | 3317 | 3156 | 3230 |
| Verhältnis Ox/Is | 1,38 | 1,07 | 1,85 | 1,42 | 0,89 | 0,76 |

Dabei wurden die mechanischen Eigenschaften wie folgt bestimmt:

| | |
|---|---|
| Shore D ―Härte: | DIN ISO 7619-1 |
| Zugfestigkeit: | DIN EN ISO 527 |
| Reißdehnung: | DIN EN ISO 527 |
| E-Modul: | DIN EN ISO 527 |
| Kerbschlagzähigkeit: | DIN EN ISO 179-1/1eU |
| Biegefestigkeit: | DIN EN ISO 178 |
| Biege-E-modul: | DIN EN ISO 178 |

Die Tabelle zeigt, dass durch den Einsatz erfindungsgemäßer Katalysatoren ein deutlich erhöhter Gehalt an Oxazolidinongruppen im Vergleich zu Isocyanuratgruppen im Feststoff erhalten werden. Dies hat Auswirkungen auf die mechanischen Eigenschaften. So erhöht sich bei Einsatz der erfindungsgemäßen Katalysatoren insbesondere die Glastemperatur, die Kerbschlagzähigkeit und die Biegefestigkeit bei konstanter Härte.

## Patentansprüche

1. Verfahren zur Herstellung von Oxazolidinongruppen aufweisenden Formkörpern, bei dem man
a) Polyisocyanat mit
b) mindestens einer, mindestens zwei Epoxidgruppen aufweisenden organischen Verbindung,
c) mindestens einem, die Isocyanat/Epoxid-Reaktion beschleunigenden Katalysator und
d) gegebenenfalls Hilfs- und Zusatzstoffen zu einer Reaktionsmischung vermischt und zu Oxazolidinongruppen aufweisenden Formkörpern umsetzt, wobei der die Isocyanat/Epoxid-Reaktion beschleunigenden Katalysator c) eine Verbindung der allgemeinen Formel
[M(R₁)(R₂)(R₃)(R₄)]⁺ [X Iₙ]⁻
aufweist, wobei
M für ein Stickstoff- oder ein Phosphoratom steht,
R₁, R₂, R₃ und R₄ für einen organischen Rest stehen, jeweils unabhängig voneinander ausgewählt aus der Gruppe, bestehend aus linearen oder verzweigtkettigen Alkylresten mit 1 bis 22 Kohlenstoffatomen, die mit Heteroatomen oder Heteroatome enthaltenden Substituenten substituiert sein können, alkylgebrückten cycloaliphatischen oder aromatischen Gruppen mit 3 bis 22 Kohlenstoffen, die mit Heteroatomen oder Heteroatome enthaltenden Gruppen substituiert sein können, und Arylresten mit 6 bis 18 Kohlenstoffatomen, die mit Alkylgruppen mit 1 bis 10 Kohlenstoffatomen und/oder Heteroatomen substituiert sein können,
X für Fluorid, Chlorid, Bromid oder lodid steht,
I für Iod steht und
n für rationale Zahlen von 0,1 bis 10 steht.

2. Verfahren nach Anspruch 1, **dadurch gekennzeichnet, dass** n für rationale Zahlen von 0,5 bis 3 steht.

3. Verfahren nach Anspruch 1 oder 2, **dadurch gekennzeichnet, dass** X für Chlorid oder Bromid steht.

4. Verfahren nach einem der Ansprüche 1 bis 3, **dadurch gekennzeichnet, dass** das molare Verhältnis von Polyisocyanatgruppen der Polyisocyanate (a) zu Epoxidgruppen der mindestens einen, mindestens zwei Epoxidgruppen aufweisenden organischen Verbindung (b) 1 : 10 bis 10 : 1 beträgt.

5. Verfahren nach einem der Ansprüche 1 bis 4, **dadurch gekennzeichnet, dass** die mindestens zwei Epoxidgruppen aufweisenden organischen Verbindung ausgewählt sind aus der Gruppe, bestehend aus Polyglycidylether von Bisphenol A, Bisphenol F oder Novolaken oder Mischungen davon.

6. Verfahren nach einem der Ansprüche 1 bis 5, **dadurch gekennzeichnet, dass** R₁, R₂, R₃, und R₄ für einen organischen Rest stehen, jeweils unabhängig voneinander ausgewählt aus der Gruppe bestehend aus phenyl, cyclohexyl und linearen oder verzweigtkettigen Alkylgruppen mit 1 bis 6 Kohlenstoffatomen.

7. Verfahren nach einem der Ansprüche 1 bis 6, **dadurch gekennzeichnet, dass** R₁, R₂, R₃ und R₄ identisch sind.

8. Verfahren nach einem der Ansprüche 1 bis 7, **dadurch gekennzeichnet, dass** die Form bei der Umsetzung der Reaktionsmischung zum Oxazolidinongruppen aufweisenden Formkörper eine Temperatur von 140 °C bis 280 °C aufweist.

9. Verfahren nach einem der Ansprüche 1 bis 8, **dadurch gekennzeichnet, dass** eine Polyolkomponente, enthaltend die Komponenten b) und c), mit Isocyanat a) zur Reaktionsmischung vermischt wird.

10. Verfahren nach einem der Ansprüche 1 bis 8, **dadurch gekennzeichnet, dass** eine Isocyanatkomponente, enthaltend die Komponenten a) und b), mit Katalysator c) zur Reaktionsmischung vermischt wird.

11. Verfahren nach einem der Ansprüche 1 bis 10, **dadurch gekennzeichnet, dass** als Polyisocyanate a) isocyanate eingesetzt werden, ausgewählt aus der Gruppe, bestehend aus 1,12-Dodecandiisocyanat 2-Ethyltetramethylendiisocyanat-1,4,2-methylpentame-thylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'-und 2,2'-Diphenylmethandiisocyanaten und Polyphenylpolymethylenpolyisocyanaten (Roh-MDI) und Mischungen aus Roh-MDI und Toluylendiisocyanaten.

12. Oxazolidinongruppen aufweisender Formkörper, erhältlich nach einem Verfahren gemäß einem der Ansprüche 1 bis 11.

13. Verwendung eines Katalysators der allgemeinen Formel
[M(R₁)(R₂)(R₃)(R₄)]⁺ [X Iₙ]⁻,
wobei M für ein Stickstoff- oder ein Phosphoratom steht,
R₁, R₂, R₃, und R₄ für einen organischen Rest stehen, jeweils unabhängig voneinander ausgewählt aus der Gruppe, bestehend aus linearen oder verzweigtkettigen Alkylresten mit 1 bis 22 Kohlenstoffatomen, die mit Heteroatomen oder Heteroatomen enthaltenden Substituenten substituiert sein können, alkylgebrückten cycloaliphatischen oder aromatischen Gruppen mit 3 bis 22 Kohlenstoffen, die mit Heteroatomen oder Heteroatome enthaltenden Gruppen substituiert sein können, und Arylresten mit 6 bis 18 Kohlenstoffatomen, die mit Alkylgruppen mit 1 bis 10 Kohlenstoffatomen und/oder Heteroatomen substituiert sein können,
X für Fluorid, Chlorid, Bromid oder lodid steht,
I für lod steht und
n für rationale Zahlen von 0,1 bis 10 steht,
zur Herstellung von Oxazolidinongruppen aufweisenden Formkörpern.

## Claims

1. A process for producing moldings comprising oxazolidinone groups,
wherein
a) polyisocyanate is mixed with
b) at least one organic compound having two or more epoxide groups,
c) at least one catalyst for the isocyanate/epoxide reaction, and
d) optionally auxiliary and additive materials
to form a reaction mixture, and reacted to form moldings comprising oxazolidinone groups, where the catalyst c) for the isocyanate/epoxide reaction comprises a compound of the general formula
[M(R₁)(R₂)(R₃)(R₄)]⁺ [X Iₙ]⁻
, where
M is a nitrogen atom or a phosphorus atom,
R₁, R₂, R₃ and R₄ are an organic radical, in each case selected independently of one another from the group consisting of linear or branched-chain alkyl radicals having 1 to 22 carbon atoms and being possibly substituted by heteroatoms or substituents comprising heteroatoms, and of alkyl-bridged cycloaliphatic or aromatic groups having 3 to 22 carbon atoms and being possibly substituted by heteroatoms or groups comprising heteroatoms, and of aryl radicals having 6 to 18 carbon atoms and being possibly substituted by alkyl groups having 1 to 10 carbon atoms and/or heteroatoms,
X is fluoride, chloride, bromide or iodide,
I is iodine, and
n stands for rational numbers from 0.1 to 10.

2. The process according to claim 1, wherein n stands for rational numbers from 0.5 to 3.

3. The process according to claim 1 or 2, wherein X is chlorid or bromid.

4. The process according to any of claims 1 to 3, wherein the molar ratio of polyisocyanate groups in the polyisocyanates (a) to epoxide groups in the at least one organic compound (b) having two or more epoxide groups is 1:10 to 10:1.

5. The process according to any of claims 1 to 4, wherein the organic compound having two or more epoxide groups is selected from the group consisting of polyglycidyl ether of bisphenol A, bisphenol F or novolacs or mixtures thereof.

6. The process according to any of claims 1 to 5, wherein R₁, R₂, R₃ and R₄ are an organic radical in each case selected independently of one another from the group consisting of phenyl, cyclohexyl and linear or branched-chain alkyl groups having 1 to 6 carbon atoms.

7. The process according to any of claims 1 to 6, wherein R₁, R₂, R₃ and R₄ are identical.

8. The process according to any of claims 1 to 7, wherein the mold in the reaction of the reaction mixture to give the molding comprising oxazolidinone groups has a temperature of 140°C to 280°C.

9. The process according to any of claims 1 to 8, wherein a polyol component comprising components b) and c) is mixed with isocyanate a) to form the reaction mixture.

10. The process according to any of claims 1 to 8, wherein an isocyanate component comprising components a) and b) is mixed with catalyst c) to from the reaction mixture.

11. The process according to any of claims 1 to 10, wherein polyisocyanates a) used are isocyanates selected from the group consisting of dodecane 1,12-diioscyanate, 2-ethyltetramethylene 1,4-diisocyanate, 2-methylpentamethylene 1,5-diisocyanate, tetramethylene 1,4-diisocyanate, and preferably hexamethylene 1,6-diisocyanate; cycloaliphatic diisocyanates such as cyclohexane 1,3- and 1,4-diisocyanate and also any desired mixtures of these isomers, 1-isocyanato-3,3,5-trimethyl-5-isocyanatomethylcyclohexane (IPDI), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures, tolylene 2,4- and 2,6-diisocyanate and the corresponding isomer mixtures, diphenylmethane 4,4'-, 2,4'- and 2,2'-diisocyanate and the corresponding isomer mixtures, mixtures of diphenylmethane 4,4'- and 2,2'-diisocyanates, polyphenylpolymethylene polyisocyanates, mixtures of diphenylmethane 4,4'-, 2,4'- and 2,2'-diisocyanates and polyphenylpolymethylene polyisocyanates (crude MDI), and mixtures of crude MDI and tolylene diisocyanates.

12. A molding comprising oxazolidinone groups, obtainable by a process according to any of claims 1 to 11.

13. The use of a catalyst of the general formula
[M(R₁)(R₂)(R₃)(R₄)]⁺ [X Iₙ]⁻,
wherein M is a nitrogen atom or a phosphorus atom,
R₁, R₂, R₃ and R₄ are an organic radical, in each case selected independently of one another from the group consisting of linear or branched-chain alkyl radicals having 1 to 22 carbon atoms and being possibly substituted by heteroatoms or substituents comprising heteroatoms, and of alkyl-bridged cycloaliphatic or aromatic groups having 3 to 22 carbon atoms and being possibly substituted by heteroatoms or groups comprising heteroatoms, and of aryl radicals having 6 to 18 carbon atoms and being possibly substituted by alkyl groups having 1 to 10 carbon atoms and/or heteroatoms,
X is fluorid, chlorid, bromid or iodid,
I is iodine, and
n stands for rational numbers from 0.1 to 10,
for producing moldings comprising oxazolidinone groups.

## Revendications

1. Procédé de fabrication de corps façonnés présentant des groupes oxazolidinone, dans lequel on mélange
a) du polyisocyanate avec
b) au moins un composé organique présentant au moins deux groupes époxyde,
c) au moins un catalyseur accélérant la réaction isocyanate/époxyde et
d) le cas échéant des adjuvants et des additifs,
en un mélange réactionnel et on le transforme en corps façonnés présentant des groupes oxazolidinone, le catalyseur accélérant la réaction isocyanate/époxyde c) présentant un composé de formule générale
[M(R₁)(R₂)(R₃)(R₄)]⁺ [X Iₙ]⁻
dans laquelle
M représente un atome d'azote ou de phosphore,
R₁, R₂, R₃ et R₄ représentent des radicaux organiques, choisis à chaque fois indépendamment les uns des autres, dans le groupe constitué par les radicaux alkyle linéaires ou à chaîne ramifiée comprenant 1 à 22 atomes de carbone, qui peuvent être substitués par des hétéroatomes ou des substituants contenant des hétéroatomes, les groupes cycloaliphatiques ou aromatiques comprenant 3 à 22 atomes de carbone pontés par alkyle, qui peuvent être substitués par des hétéroatomes ou des groupes contenant des hétéroatomes, et les radicaux alkyle comprenant 6 à 18 atomes de carbone, qui peuvent être substitués par des groupes alkyle comprenant 1 à 10 atomes de carbone et/ou des hétéroatomes,
X représente fluorure, chlorure, bromure ou iodure,
I représente iode et
n représente des nombres rationnels de 0,1 à 10.

2. Procédé selon la revendication 1, **caractérisé en ce que** n représente des nombres rationnels de 0,5 à 3.

3. Procédé selon la revendication 1 ou 2, **caractérisé en ce que** X représente chlorid ou bromid.

4. Procédé selon l'une quelconque des revendications 1 à 3, **caractérisé en ce que** le rapport molaire des groupes polyisocyanate des polyisocyanates (a) aux groupes époxyde dudit au moins un composé organique (b) présentant au moins deux groupes époxyde vaut 1:10 à 10:1.

5. Procédé selon l'une quelconque des revendications 1 à 4, **caractérisé en ce que** le composé organique présentant au moins deux groupes époxyde est choisi dans le groupe constitué par les polyglycidyléthers de bisphénol A, de bisphénol F ou de novolaques ou des mélanges de ceux-ci.

6. Procédé selon l'une quelconque des revendications 1 à 5, **caractérisé en ce que** R₁, R₂, R₃, et R₄ représentent un radical organique et sont choisis, à chaque fois indépendamment les uns des autres, dans le groupe constitué par phényle, cyclohexyle et les groupes alkyle linéaires ou à chaîne ramifiée comprenant 1 à 6 atomes de carbone.

7. Procédé selon l'une quelconque des revendications 1 à 6, **caractérisé en ce que** R₁, R₂, R₃ et R₄ sont identiques.

8. Procédé selon l'une quelconque des revendications 1 à 7, **caractérisé en ce que** le moule lors de la transformation du mélange réactionnel en corps façonnés présentant des groupes oxazolidinone présente une température de 140°C à 280°C.

9. Procédé selon l'une quelconque des revendications 1 à 8, **caractérisé en ce qu'**un composant polyol, contenant les composants b) et c), est mélangé avec l'isocyanate a) en mélange réactionnel.

10. Procédé selon l'une quelconque des revendications 1 à 8, **caractérisé en ce qu'**un composant isocyanate, contenant les composants a) et b), est mélangé avec le catalyseur c) en mélange réactionnel.

11. Procédé selon l'une quelconque des revendications 1 à 10, **caractérisé en ce qu'**on utilise, comme polyisocyanates a), des isocyanates choisis dans le groupe constitué par le diisocyanate de 1,12-dodécane, le 2-éthyltétraméthylènediisocyanate-1,4,2-méthylpentaméthylènediisocyanate-1,5, le tétraméthylènediisocyanate-1,4, et de préférence l'hexaméthylènediisocyanate-1,6 ; les diisocyanates cycloaliphatiques, tels que le 1,3-diisocyanate de cyclohexane et le 1,4-diisocyanate de cyclohexane ainsi que des mélanges quelconques de ces isomères, le 1-isocyanato-3,3,5-triméthyl-5-isocyanatométhylcyclohexane (IPDI), le diisocyanate de 2,4-hexahydrotoluylène et de 2,6-hexahydrotoluylène ainsi que les mélanges isomères correspondants, le diisocyanate de 4,4'-dicyclohexylméthane, de 2,2'-dicyclohexylméthane et de 2,4'-dicyclohexylméthane ainsi que les mélanges isomères correspondants, le diisocyanate de 2,4-toluylène et de 2,6-toluylène et les mélanges isomères correspondants, le diisocyanate de 4,4'-diphénylméthane, de 2,4'-diphénylméthane et de 2,2'-diphénylméthane et les mélanges isomères correspondants, les mélanges de diisocyanates de 4,4'-diphénylméthane et de 2,2'-diphénylméthane, les polyisocyanates de polyphénylpolyméthylène, les mélanges de diisocyanates de 4,4'-diphénylméthane, de 2,4'-diphénylméthane et de 2,2'-diphénylméthane et les polyisocyanates de polyphénylpolyméthylène (MDI brut) et les mélanges de MDI brut et de diisocyanates de toluylène.

12. Corps façonnés présentant des groupes oxazolidinone, pouvant être obtenus selon un procédé selon l'une quelconque des revendications 1 à 11.

13. Utilisation d'un catalyseur de formule générale
[M(R₁)(R₂)(R₃)(R₄)]⁺ [X Iₙ]⁺,
dans laquelle
M représente un atome d'azote ou de phosphore,
R₁, R₂, R₃, et R₄ représentent des radicaux organiques, choisis à chaque fois indépendamment les uns des autres, dans le groupe constitué par les radicaux alkyle linéaires ou à chaîne ramifiée comprenant 1 à 22 atomes de carbone, qui peuvent être substitués par des hétéroatomes ou des substituants contenant des hétéroatomes, les groupes cycloaliphatiques ou aromatiques comprenant 3 à 22 atomes de carbone pontés par alkyle, qui peuvent être substitués par des hétéroatomes ou des groupes contenant des hétéroatomes, et les radicaux alkyle comprenant 6 à 18 atomes de carbone, qui peuvent être substitués par des groupes alkyle comprenant 1 à 10 atomes de carbone et/ou des hétéroatomes,
X représente fluorid, chlorid, bromid ou iodid,
I représente iode et
n représente des nombres rationnels de 0,1 à 10. pour la fabrication de corps façonnés présentant des groupes oxazolidinone.
